# EUROPEAN PATENT SPECIFICATION

(11) **EP 0 677 648 B1**
(45) Date of publication and mention of the grant of the patent: **05.08.1998**
(21) Application number: 95102990.9
(22) Date of filing: 02.03.1995
(51) Int. Cl.: F01N 3/20

(54) **Exhaust gas purification apparatus**
Abgasreinigungsgerät
Appareil de purification de gaz d'échappement

(30) Priority: 13.04.1994 JP 74735/94; 27.07.1994 JP 175639/94; 09.09.1994 JP 215729/94; 03.10.1994 JP 238889/94
(43) Date of publication of application: 18.10.1995
(73) Proprietor: DENSO CORPORATION, Kariya-City Aichi-Pref. 448 (JP)
(72) Inventor: Tanaka, Masakazu, Sakaemachi-4-chome, Okazaki-shi (JP); Mori, Hiroshi, Ichinomiya-shi (JP); Saito, Makoto, Etakecho, Nishio-shi (JP); Mabuchi, Mamoru, Kariya-shi (JP); Usami, Hiroyuki, Kariya-shi (JP); Yamamoto, Takahiko, Yokonemachi, Obu-shi (JP)
(74) Representative: Tiedtke, Harro, Dipl.-Ing.

(56) References cited:
- EP-A- 0 318 462
- EP-A- 0 378 797
- EP-A- 0 588 315
- DE-A- 3 627 637
- DE-A- 4 328 125
- GB-A- 1 395 960
- US-A- 3 090 677
- PATENT ABSTRACTS OF JAPAN vol. 17 no. 374 (M-1445) ,14 July 1993 & JP-A-05 059942 (TOYOTA MOTOR CORP) & US-A-5 315 824 (TAKESHIMA)
- PATENT ABSTRACTS OF JAPAN vol. 12 no. 39 (M-665) ,5 February 1988 & JP-A-62 191609 (TOYOTA MOTOR CORP) 22 August 1987,
- PATENT ABSTRACTS OF JAPAN vol. 18 no. 360 (M-1634) ,7 July 1994 & JP-A-06 093850 (HITACHI LTD) 5 April 1994,

## Description

The present invention relates to an exhaust gas purification apparatus according to the preamble of claim 1, and more particularly, to an apparatus for purifying an exhaust gas discharged from an internal combustion engine used in an automobile or the like.

For the purpose of purifying an exhaust gas of an automobile, there exist an-exhaust gas purifying method and an exhaust gas purification apparatus, which employ an absorbent carrying noble metal (platinum, rhodium or the like) as a catalyst. In the above-described method and apparatus, it is generally necessary that the absorbent be at a temperature equal to or higher than a catalyst activating temperature of 350°C in order to purify HC in the exhaust gas.

However, the conventional art has a problem in that HC is hardly purified immediately after the start of the engine because the temperature of the aforesaid catalyst does not reach the catalyst activating temperature.

To solve this problem, there has been proposed a purification apparatus including a catalyst unit provided in an exhaust system of an engine and an HC trapper containing an absorbent for adsorbing HC (which will be referred to as cold HC) discharged when the engine is in a cool state, which HC trapper is disposed on the upstream or downstream side of the catalyst unit (Japanese Patent Unexamined Publication Nos. 2-135126, 4-17710 and 4-311618).

The purification apparatus disclosed in Japanese Patent Unexamined Publication No. 2-135126 employs an absorbent unit and a catalyst unit in combination, which absorbent unit using a zeolitic absorbent is located on the upstream side of the catalyst unit. In this apparatus, cold HC is adsorbed by the absorbent when an exhaust gas is at a low temperature and the HC desorbed from the absorbent and HC discharged from the engine are purified by the catalyst unit when the exhaust gas is at a high temperature.

In each of the purification apparatuses disclosed in Japanese Patent Unexamined Publication Nos. 4-17710 and 4-311618, an HC trapper containing an absorbent is provided on the downstream side of a catalyst unit in parallel with a main exhaust pipe, and flow-path change-over valves are provided respectively in a bypass pipe including the trapper and the main exhaust pipe. These valves are operated for a certain period of time immediately after the start of an engine so that an exhaust gas flows through the bypass pipe, during which cold HC is adsorbed by the trapper. Upon the lapse of the certain period of time after the start of the engine, during which the temperature of the exhaust gas rises and the cold HC is brought into a state in which it is desorbed from the absorbent of the HC trapper, the valve are turned to positions for flowing the exhaust gas into the main exhaust pipe. At this time, a negative pressure in an intake pipe of the engine is applied to a desorption pipe connecting the downstream side of the trapper to the intake pipe of the engine, so that the desorbed HC is sucked into the intake pipe so as to be burned again in the engine.

Further, Japanese Patent Unexamined Publication No. 4-311618 discloses an example in which desorbed HC is sucked to return to the upstream side of a catalyst by means of a suction pump.

Among the above-described conventional techniques for adsorbing cold HC, the technique including the HC trapper provided on the upstream side of the catalyst unit has a problem in that the adsorbing capacity of the absorbent is impaired by the high-temperature exhaust gas which flows in the HC trapper immediately after it is discharged from the engine. In view of the above, the apparatus disclosed in Japanese Patent Unexamined Publication No. 2-135126 uses the zeolitic type absorbent having a high heat resistance. However, the adsorbing capacity of the absorbent is generally higher as it is at a lower temperature. Even the zeolitic type absorbent desorbs HC before the catalyst reaches an activating temperature. Accordingly, the adsorbed HC is discharged to the atmosphere without being purified. Further, when the HC trapper is provided upstream of the catalyst unit, since the trapper itself possesses a large heat capacity, there arises a problem in that a time required for activating the catalyst or a time required until the catalyst reaches an activating temperature is delayed.

On the other hand, the apparatus disclosed in Japanese Patent Unexamined Publication No. 4-17710 or 4-311618 in which the HC trapper is provided downstream of the catalyst unit, solves the above-described problems in respect of the cold HC adsorbing capacity and the catalyst activation. However, the heat of the exhaust gas is conducted to the absorbent slowly through the bypass pipe and it takes a long time to desorb the HC from the absorbent, so that the desorption is not sometimes completed. If this unfavorable state is repeated, HC is accumulated in the absorbent, and the absorbent is saturated with too much HC to adsorb the same. Further, when the exhaust gas containing HC is returned to the intake pipe, an error occurs in the air-fuel ratio control of the engine, so that an adverse effect may be caused on fuel consumption, exhaust gas purification or drivability.

According to the apparatus of the type in which the desorbed HC is sucked to return to the upstream side of the catalyst by means of the suction pump, the aforesaid problems can be solved because an error hardly occurs in the air-fuel ratio control of the engine. However, it is difficult and expensive to develop a suction pump which can withstand severe exhaust-gaseous conditions (high-temperature, high-humidity and highly-corrosive atmosphere) for a long time of period. Therefore, this apparatus cannot be easily realized and it conclusively lacks mass productivity.

In view of the above, the inventors of the present invention proposes in Japanese Patent Application No. 5-61036 an exhaust gas purification apparatus which can solve almost all the above-described problems. More specifically, in the apparatus of Japanese Patent Application No. 5-61036, an HC trapper is provided on the downstream side of a catalyst unit, and the HC trapper is provided in one exhaust pipe and an interior of the trapper is partitioned in place of providing a bypass pipe. With such structure, the heat of the exhaust gas is preferably conducted to the absorbent so as to promote the desorption of HC.

Also, there is provided a recirculation flow pipe including a one-way valve between the upstream side of the catalyst unit and the HC trapper. The desorbed HC is returned to the upstream side of the catalyst unit by the pulsation of the exhaust gas through the recirculation flow pipe, and the returned HC is purified by the catalyst.

As a result of further investigations by the inventors of this invention after the above application, it has become apparent that the flow rate of recirculation through the flow pipe is increased or decreased depending on the position of provision of the one-way valve within the recirculation flow pipe which valve receives the exhaust gas pulsation. It has also become apparent that the flow rate of recirculation is increased or decreased depending on the position of a port of the recirculation flow pipe provided in an exhaust manifold.

From the EP-A-0 588 315 an exhaust gas purification apparatus is known comprising a catalyst unit provided in an exhaust path of an internal combustion engine and having an inlet portion and an outlet portion for an exhaust gas. This catalyst unit consists of a honeycomb-shaped adsorption means provided in the catalyst unit for adsorbing harmful components in the exhaust gas from the internal combustion engine. A lateral flow path is formed in the catalyst unit and disposed laterally of the adsorption means to permit the exhaust gas introduced into the catalyst unit to pass therethrough. Further, there is provided a change-over means in the catalyst unit for switching a flow of the exhaust gas introduced into the catalyst unit to a side of the adsorption means or a side of the lateral flow path. One side of the adsorption means is exposed to said lateral flow path so that the exhaust gas flowing through said lateral flow path is brought into contact with the side of the adsorption means so that the adsorption means receives heat transmitted from the exhaust gas.

### SUMMARY OF THE INVENTION

In view of the above, it is an object of the present invention to provide an exhaust gas purification apparatus in which the emission of a harmful component in an exhaust gas can be prevented when an engine is in a cool state, HC adsorbed by an absorbent is desorbed in a short period of time and returned to a catalyst unit when the engine is warmed up, and an adverse effect on the engine caused by the recirculation of HC is minimized as far as possible.

An aspect of the present invention is to provide an exhaust gas purification apparatus which is based on Japanese Patent Unexamined Application No. 5-61036, in which by effectively utilizing pulsation of an exhaust gas, a flow rate of recirculation is increased, and HC desorbed during warming up an engine is recirculated to a catalyst unit without leakage in a short period of time, so as to be purified by the catalyst.

A further aspect of the present invention is to provide an exhaust gas purification apparatus including exhaust-gas-flow-path change-over means for switching a flow path of adsorption means and an exhaust gas flow path forming a flow of an exhaust gas which does not pass through the adsorption means, wherein the exhaust-gas-flow-path change-over means is provided only on the downstream side of the adsorption means to thereby simplify the structure of the apparatus, and a rectifying plate for rectifying a flow of the exhaust gas is provided upstream of the adsorption means, so that a flow velocity of the exhaust gas flowing into the adsorption means is uniformly distributed, adsorbing efficiency of the adsorption means can be improved, and during desorbing a harmful component such as HC or the like, the once-adsorbed HC is prevented from flowing out toward the exhaust gas flow path.

To achieve the above-described object, there is provided an exhaust gas purification apparatus comprising the features according to claim 1.

Further improvements of the present invention are subject-matters of the dependent claims.

### BRIEF DESCRIPTION OF THE DRAWINGS

Fig. 1 is a view showing an arrangement of a first embodiment of the present invention;
Fig. 2 is a perspective view of a honeycomb member which carries an absorbent on its semicircular cross-sectional portion, and a partition wall which is employed in the first embodiment;
Fig. 3 is a flowchart showing the operation of the first embodiment;
Figs. 4A, 4B and 4C are explanatory views of pulsation of an exhaust gas applied to a one-way valve used in the apparatus according to the first embodiment;
Figs. 5A and 5B are explanatory views showing flowing states of the exhaust gas in the apparatus of the first embodiment;
Fig. 5C is an explanatory view showing a flowing state of the exhaust gas when a rectifying plate is removed from the apparatus of the first embodiment;
Figs. 6A and 6B are views for explanation of a second embodiment of the invention;
Figs. 7A and 7B are views for explanation of a third embodiment of the invention;
Fig. 8 is a view showing an arrangement of an apparatus according to a fourth embodiment of the invention;
Fig. 9 is a view showing the overall arrangement of an apparatus according to a fifth embodiment of the invention;
Figs. 10A and 10B are views for explanation of one example of pulsation of the exhaust gas applied to a one-way valve used in the apparatus of the fifth embodiment;
Fig. 11 is a view showing an arrangement of an essential portion of an apparatus according to a sixth embodiment of the invention;
Fig. 12 is a view showing an arrangement of an essential portion of an apparatus according to a seventh embodiment of the invention;
Fig. 13 is a perspective view of adsorption means used in the apparatus of the seventh embodiment of the invention;
Fig. 14 is a view showing an arrangement of an apparatus according to an eighth embodiment of the invention;
Fig. 15 is a perspective view of a honeycomb member which carries an absorbent on its semicircular cross-sectional portion, and a partition wall which are employed in the apparatus of the eighth embodiment;
Figs. 16A and 16B are enlarged views of a front end portion of the honeycomb member used in the eighth embodiment;
Fig. 17 is an enlarged view of a rear end portion of the honeycomb member used in the eighth embodiment;
Figs. 18A and 18B are views showing an arrangement of an apparatus according to a ninth embodiment of the invention;
Figs. 19A and 19B are views showing the arrangement of an apparatus according to a tenth embodiment of the invention; and
Fig. 20 is a view showing an arrangement of an apparatus according to an eleventh embodiment of the invention.

### DESCRIPTION OF THE PREFERRED EMBODIMENTS

Preferred embodiments of the present invention will now be described with reference to the accompanying drawings.

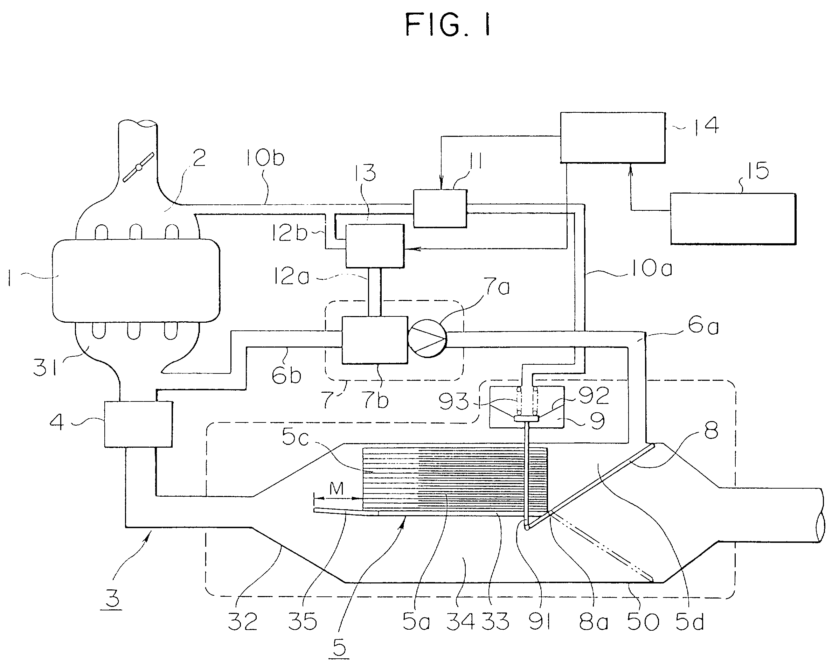

Fig. 1 shows an example in which the present invention is applied to an exhaust gas purification apparatus for an automobile engine. In the apparatus, an exhaust pipe 3 of the gasoline engine 1 of the automobile includes a catalyst unit 4 located just behind an exhaust manifold 31. The catalyst unit 4 includes therein a honeycomb-like carrier composed of cordierite which carries a three-way type catalyst mainly containing noble metal such as platinum, rhodium or the like.

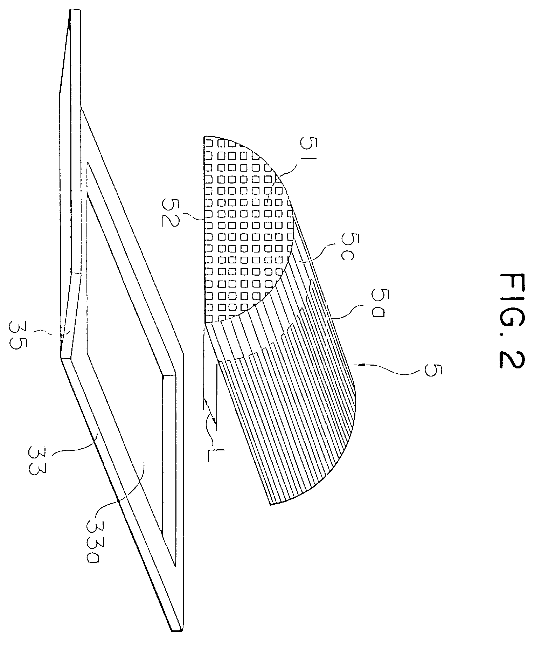

The exhaust pipe 3 includes an enlarged-diameter portion 32 located on the downstream side of the catalyst unit 4, and a cylindrical adsorption tube 50 formed continuously with the enlarged-diameter portion 32. The adsorption tube 50 contains adsorption means 5 of a honeycomb structure therein. The adsorption means 5 of the honeycomb structure is composed of stainless steel or ceramics such as cordierite or the like. As shown in Fig. 2, the adsorption means 5 is formed in a semi-cylindrical shape so as to occupy a half of a cross-sectional portion of the cylindrical adsorption tube 50 which is continuous with the enlarged-diameter portion 32. Thus, the adsorption means 5 is closely fitted in the adsorption tube 50. The adsorption means 5 is incorporated in the adsorption tube 50 in such a manner that a flat surface 52 of the semi-cylindrical shape of the means 5 is directed to a central portion of the adsorption tube 50.

The adsorption member 5 has a plurality of parallel passing holes 51, as shown in Fig. 2. A zeolitic absorbent is carried by an absorbent carrying layer 5a formed over the entire surface of the means 5 except for an upstream end thereof. The zeolitic absorbent is capable of adsorbing HC gas which is a harmful component in an exhaust gas from the engine 1.

Thus, when a temperature of the exhaust gas of the internal combustion engine is above a predetermined level, the exhaust gas passes through the passing holes provided in the adsorption means. Accordingly, it is possible to effectively desorb the harmful component adsorbed even by a small-sized adsorption means. In addition, the shape of the adsorption means 5 is not restricted to the semi-cylindrical shape, and this means 5 may be formed in an elliptical or rectangular shape. Similarly, the adsorption tube 50 may be formed in an elliptical or rectangular shape in conformity with the shape of the adsorption means 5.

An exhaust-gas-flow-path change-over valve 8 serving as change-over means is provided just behind a downstream (rear) end of the absorbent carrying layer 5a of the adsorption means 5. The change-over valve 8 is pivotally operated about a point 8a of the support to selectively open or close a flow path 5d of the adsorption means 5 of the honeycomb structure and an exhaust gas flow path 34 adjacent to the flow path 5d. The flow-path change-over valve 8 is connected to an actuator 9 via a shaft 91.

In this connection, since the change-over means is provided only on the downstream side of the adsorption means, when the temperature of the exhaust gas of the internal combustion engine is above a predetermined level, the exhaust gas always collides against the upstream end face of the adsorption means so that the desorption of the harmful component from the adsorption means can be promoted by heat of the exhaust gas.

A distance between the catalyst unit 4 and the adsorption means 5 is set such that a timing at which the catalyst unit 4 is heated by the exhaust gas to reach an activating temperature substantially coincides with a timing at which the absorbent carried by the adsorption means 5 is heated to lose its adsorbing capacity. That is to say, because the temperature at which the absorbent carried by the adsorption means 5 loses its adsorbing capacity (in other words, a temperature of 100°C to 200°C at which the absorbent starts to desorb HC) is lower than the catalyst activating temperature of the catalyst unit 4, it is necessary to locate the adsorption means 5 behind the catalyst unit 4 at the predetermined distance, whereby the above-described timings can be coincided with each other.

The adsorption means 5 includes a plate-like partition wall 33 positioned between the flow path 34 and itself. The partition wall 33 separates the adsorption means 5 from the flow path 34 and it presses the adsorption means 5 against the adsorption tube 50 so as to hold the same. An opening portion or bore 33a is formed in the partition wall 33 so that the exhaust gas flowing in the flow path 34 can directly contact with the adsorption means 5 through the bore 33a.

By thus forming the opening portion in the partition wall, it is possible to directly expose the exhaust gas discharged from the internal combustion engine to the adsorption means. Therefore, the harmful component can be desorbed from the adsorption means more effectively.

There is provided a rectifying plate 35 having a planar surface on the upstream side of the adsorption means 5, which rectifying plate 35 is formed by extending the partition wall 33. By providing the rectifying plate 35, it is made possible to uniform the flow velocity distribution of the exhaust gas when it flows toward the flow path 5d of the adsorption means 5, thereby improving the HC adsorbing efficiency of the absorbent. The partition wall 33 and the rectifying plate 35 are made of heat-resisting metal such as stainless steel or the like. They may be formed integral with each other as shown in Fig. 2, or separately from each other.

In Fig. 1, the rectifying plate 35 is formed to extend straight from the upstream end of the partition wall 33. Alternatively, the rectifying plate 35 may be inclinedly provided to extend upwardly at a small angle with respect to the partition wall 33, as shown in Fig. 2. Optimum values of this angle and a necessary length M of the rectifying plate 35 which realizes uniform distribution of the exhaust gas flow velocity, are determined by an experiment in which the flow velocity distribution of the exhaust gas in the practical arrangement of the adsorption means 5 is measured.

When absorbing HC, the flow-in velocity of the exhaust gas flowing into the adsorption means 5 can be uniformly controlled by means of the rectifying plate 35 provided on the upstream side of the adsorption means 5. As a result, the entire body of the adsorption means can be effectively utilized for adsorbing HC, thus remarkably improving the adsorbing efficiency.

When desorbing HC, the rectifying plate 35 prevents vortexes from occurring on the upstream side of the adsorption means 5. Therefore, the once-adsorbed HC can be prevented from flowing toward the exhaust gas flow path 34, thus further improving the exhaust gas purifying effect.

A recirculation flow pipe 6a branches from the exhaust pipe 3 at a position in the vicinity of the downstream end of the adsorption means 5 as well as on the upstream side of the change-over valve 8. The flow pipe 6a is connected to a recirculation flow pipe 6b communicated with the exhaust manifold 31 through a reed valve 7. The reed valve 7 serves as flow controlling means which controls the exhaust gas to flow through the flow pipes 6a and 6b in a predetermined direction, that is, in only one direction from the downstream end of the adsorption means 5 toward the exhaust manifold 31. The reed valve 7 comprises a one-way valve 7a and a shut-off valve 7b to be described below. Lengths of the recirculation flow pipes 6a and 6b are individually set in such a manner that an average of a phase difference between pulsations of the exhaust gas applied to back and front surfaces of the one-way valve 7a inverts at 180 (deg) or by half-wave length when the automobile runs in a typical running pattern (for example, 75FTP mode in the United States).

A condition under which the average of the phase difference between the exhaust gas pulsations applied to the back and front surfaces of the one-way valve 7a inverts by the half-wave length, will be described concretely. In order to realize such a condition, it is necessary to select a ratio between a distance from the exhaust manifold 31 to the rear side of the one-way valve 7a via the recirculation flow pipe 6b and a distance from the exhaust manifold 31 to the front side of the one-way valve 7a via the exhaust pipe 3, the adsorption tube 50 and the recirculation flow pipe 6a.

Thus, since the one-way valve 7a is adapted to operate by the differential pressure between the exhaust gas pulsations from the upstream side of the catalyst unit 4 and from the adsorption means 5, the flow rate of the exhaust gas through the recirculation flow pipes 6a and 6b can be effectively increased. As a result, the desorbed HC can rapidly flow to the upstream side of the catalyst of the exhaust pipe 3 through the recirculation flow pipe 6a and 6b, so that the desorbed HC can be purified by the catalyst unit 4 speedily.

The adsorption tube 50 is provided with the actuator 9 for driving the change-over valve 8. The change-over valve 8 is connected to the actuator 9 through the shaft 91. In the illustrated embodiment, the actuator 9 includes a diaphragm 92 and a spring 93. The actuator 9 is communicated with an intake manifold 2 of the engine 1 through inlet pipes 10a and 10b through which a negative pressure is supplied to actuate the diaphragm 92. An electromagnetic valve 11 is interposed between the inlet pipes 10a and 10b.

The one-way valve 7a of the reed valve 7 is actuated by a differential pressure of the exhaust gas pulsation between the upstream side of the catalyst unit 4 and the downstream side of the adsorption means 5, and it permits a fluid to flow only from the recirculation flow pipe 6a to the recirculation flow pipe 6b. The shut-off valve 7b is actuated by a diaphragm or the like which is actuated by a negative pressure. The shut-off valve 7b is communicated with the inlet pipe 10b through which the electromagnetic valve 11 is connected to the intake manifold 2, via inlet pipes 12a and 12b for supplying the negative pressure to the shut-off valve 7b. An electromagnetic valve 13 is provided to be interposed between the inlet pipes 12a and 12b.

Reference numeral 14 denotes a control unit (control means) incorporated in a microcomputer. The control unit 14 receives signals from the engine 1 and an exhaust gas temperature sensor 15 to controllably open/close the electromagnetic valves 11 and 13 depending upon an operating state of the engine 1, thereby controlling the change-over valve 8 and the shut-off valve 7b.

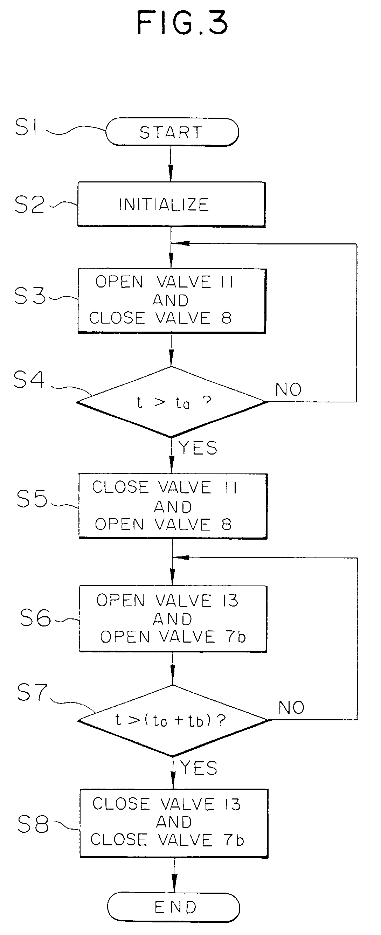

Next, the operation of the apparatus according to this embodiment having the above-described structure will be described. Fig. 3 is a flowchart for explanation of the operation of the apparatus. When an ignition switch of the engine is turned on to start the engine 1, the microcomputer of the control unit 14 starts (S1) to perform an initializing process (S2). Thereafter, the electromagnetic valve 11 is opened by the control unit 14 at S3 to communicate the inlet pipes 10a and 10b with each other.

Consequently, the negative pressure in the intake manifold 2 is applied to the diaphragm 92 of the actuator 9 through the inlet pipes 10a and 10b to pull the shaft 91 upwardly. As a result, the change-over valve 8 rotates in a clockwise direction to occupy a close position shown by a dotted line, so as to close the exhaust gas flow path 34 and open the flow path 5d of the adsorption means 5.

An exhaust gas is at a low temperature just after the start of the engine 1 and the engine 1 discharges the exhaust gas containing a lot of cold HC. Since the catalyst does not reach an activating temperature while the exhaust gas is low in temperature, the cold HC is little purified by the catalyst unit 4 and flows into the exhaust pipe 3. At this time, the temperature of the exhaust gas is monitored by the exhaust gas temperature sensor 15.

The exhaust gas does not flow through the exhaust gas flow path (main flow path) 34 but it through the flow path 5d of the adsorption means 5 because the change-over valve 5 closes the exhaust gas flow path 34. At that time, the exhaust gas passes at first through a layer 5c which does not carry zeolite and then flows through the absorbent carrying layer 5a which carries zeolite, where the cold HC is adsorbed by the absorbent.

As mentioned above, the exhaust gas purification apparatus of the present invention can prevent the emission of HC while the engine is in a cold state before the catalyst unit 4 reaches the activating temperature. Further, the absorbent can effectively adsorb HC and the HC can be effectively desorbed from the absorbent and purified, and an adverse effect on the control of the engine caused by the purification of the HC can be minimized as far as possible.

The exhaust gas from which the cold HC is removed is discharged to the atmosphere through a muffler (not shown). At this time, since the rectifying plate 35 rectifies the flow of the exhaust gas, the exhaust gas flows into the adsorption means 5 in the uniform flow velocity distribution, so that the cold HC is uniformly adsorbed by the entire body of the honeycomb carrier of the adsorption means 5, thereby improving the adsorbing efficiency.

Fig. 5A illustrates a flowing state of the exhaust gas during adsorption of HC, in which the flow velocity distribution of the exhaust gas flowing into the adsorption means 5 is uniformed by the function of the rectifying plate 35.

Upon the lapse of a predetermined period of time (ta), during which the engine 1 is warmed up and the temperature of the exhaust gas exceeds the temperature enabling the absorbent to adsorb HC (t>ta), the judgement at S4 in Fig. 3 is YES and the operation shifts to S5, where the electromagnetic valve 11 is closed in response to a signal from the control unit 14. Thus, the supply of the negative pressure to the actuator 9 is shut off, so that the actuator 9 presses the shaft 91 downwardly by elastic force of the spring 93 contained by the actuator 9.

As the shaft 91 moves downwardly, the change-over valve 8 rotates in a counterclockwise direction to occupy an open position shown by a solid line, thereby opening the exhaust gas flow path (main flow path) 34. Thus, a course of flowing the exhaust gas is changed over to permit the exhaust gas to pass through the exhaust gas flow path 34 where the adsorption means 5 does not exist. At this time, the catalyst reaches the activating temperature, so that the HC in the exhaust gas is purified by the catalyst unit 4 and the exhaust gas containing little HC is discharged to the atmosphere through the exhaust gas flow path 34.

Immediately after the electromagnetic valve 11 is closed, the electromagnetic valve 13 is opened in response to a signal from the control unit 14 at S6. Thus, the inlet pipe 10b is communicated with the inlet pipe 12a and the negative pressure is supplied from the intake manifold 2 of the engine 1 to the shut-off valve 7b to open the same.

On the other hand, the exhaust gas which has risen in temperature flows through the exhaust gas flow path 34 adjacent to the adsorption means 5. The high-temperature exhaust gas contacts with the absorbent carrying layer 5a of the adsorption means 5 through the bore 33a of the partition wall 33. Consequently, the heat of the exhaust gas is preferably conducted to the absorbent carrying layer 5a, so that the temperature of the absorbent rises rapidly to thereby promote the desorption of the HC.

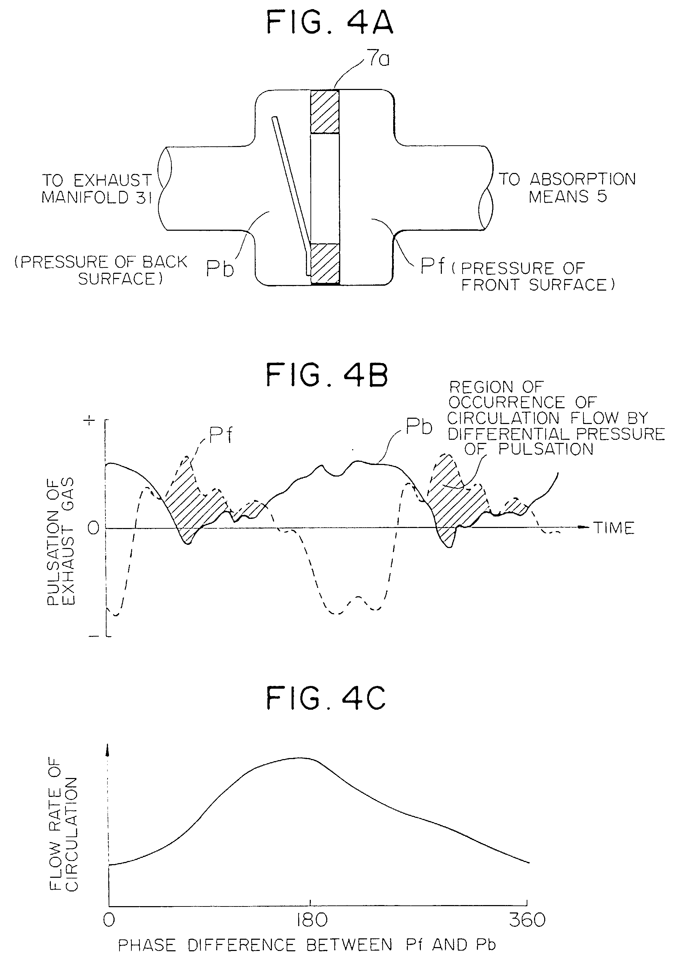

At this time, since the shut-off valve 7b is opened as described above, the pulsation pressure of the exhaust gas produced in the exhaust manifold 31 is applied to the back surface of the one-way valve 7a through the circulation flow pipe 6b. Further, the pulsation pressure of the exhaust gas produced on the downstream side of the adsorption means 5 is applied to the front surface of the one-way valve 7a through the recirculation flow pipe 6a. The one-way valve 7a is thus opened intermittently (see Fig. 4A).

The exhaust gas pulsation pressures are predetermined such that, as shown in Fig. 4B, the phases of the pressure of the front surface Pf and the pressure of the back surface Pb invert with respect to each other at 180 (deg) or by the half-wave length. Consequently, the differential pressure between both the surfaces across the valve becomes large so that the flow rate of recirculation can be increased while the one-way valve 7a is intermittently opened. Fig. 4C shows the flow rate of recirculation with respect to the phase difference. It is understood from Fig. 4C that the recirculation flow rate is maximum when the phase difference is 180 (deg). This phase difference is determined depending on a ratio between the lengths of the recirculation flow pipes 6a and 6b. The one-way valve 7a is interposed between the recirculation flow pipes 6a and 6b. In other words, the recirculation flow rate is determined depending on the position where the one-way valve 7a is located.

Accordingly, the HC desorbed from the absorbent of the absorbent carrying layer 5a of the adsorption means 5 rapidly flows into the exhaust manifold 31 through the recirculation flow pipes 6a and 6b. Then, the desorbed HC is purified by the catalyst unit 4 together with the HC in the exhaust gas from the engine 1.

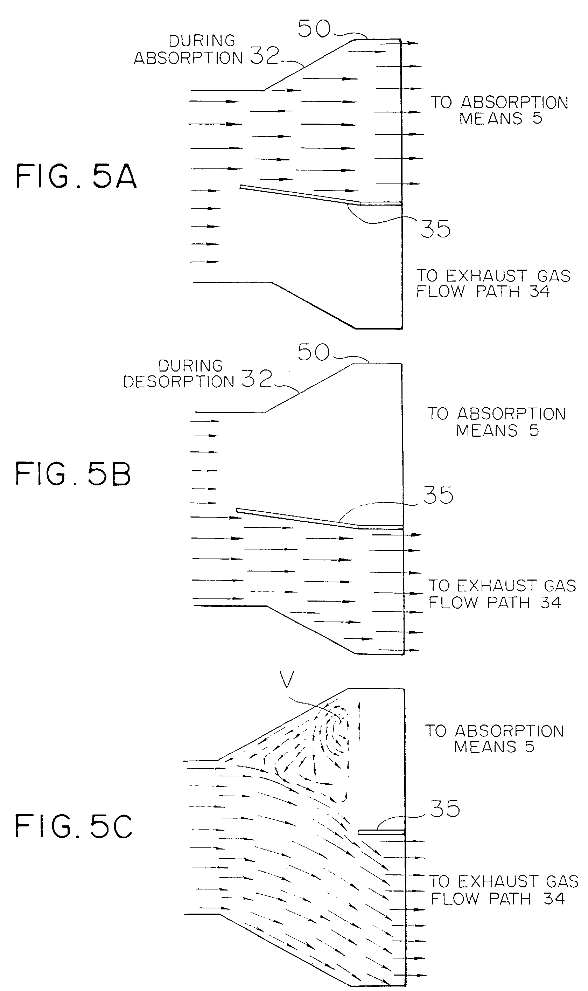

As mentioned above, when desorbing the HC, the exhaust gas hardly flows toward the upstream side of the adsorption means 5 as illustrated in Fig. 5B, so that the HC once adsorbed is not taken out of the adsorption means 5 to the upstream side thereof. Further, in this embodiment, the absorbent-free layer 5c formed on the upstream side of the adsorption means 5, surely prevents the HC from flowing out of the adsorption means 5 toward the exhaust gas flow path 34.

Incidentally, as a result of experiments and investigations by the inventors of the present invention, it has become apparent that when the rectifying plate 35 is not provided, vortexes V of the exhaust gas occur on the upstream side of the adsorption means 5 during desorption of the HC, as shown in Fig. 5C, so that the adsorbed HC is taken out of the adsorption means 5 toward the exhaust gas flow path 34 by the vortexes V, which adversely affects on the HC purifying efficiency.

When a period of time (tb) has elapsed [ t>(ta+tb)], during which the change-over valve 8 is turned to the open position (shown by the solid line) and the HC desorption/purification process is started and then the desorption of the HC is completed, the judgement at S7 is YES and the operation proceeds to S8, where the electromagnetic valve 13 and the shut-off valve 7b are closed in response to a signal from the control unit 14.

The point of time at which the change-over valve 8 is applied to the HC desorption/purification process (position shown by the solid line) by closing the electromagnetic valve 11 in response to the signal from the control unit, is after the certain period of time has elapsed from the start of the engine. Otherwise, the timing of the valve change-over process may be set depending on a fact the temperature of the exhaust gas reaches a predetermined high temperature without judging whether or not the certain period of time has elapsed.

Further, in the illustrated embodiment, the reed valve 7 includes the one-way valve 7a and the shut-off valve 7b in combination, but the reed valve 7 may comprise only the one-way valve 7a.

Then, in the exhaust gas purification apparatus of this embodiment, the emission of cold HC to the atmosphere can be prevented by adsorbing the cold HC through the adsorption means 5 when the engine is in a cold state before the catalyst reaches an activating temperature. In the apparatus, particularly, since the main exhaust gas flow path 34 and the absorbent carrying layer 5a in which the cold HC is adsorbed by the absorbent are formed separately from each other in such a manner that the exhaust gas is brought into direct contact with the absorbent carrying layer 5a, the absorbent is heated by the exhaust gas at a high temperature in the HC desorption/purification process. Also, when the adsorbed HC is being desorbed, the one-way valve 7a is intermittently opened by the pulsation pressures of the exhaust gas applied to the front and back surfaces of the one-way valve 7a so as to return the desorbed HC to the upstream side of the catalyst unit 4 through the circulation flow pipes 6a and 6b to thereby permit the HC to be effectively desorbed and purified. Further, since the desorbed HC is returned to the exhaust pipe 3 on the upstream side of the catalyst unit 4, the adverse effect on the control of the engine caused by the return of the HC can be reduced.

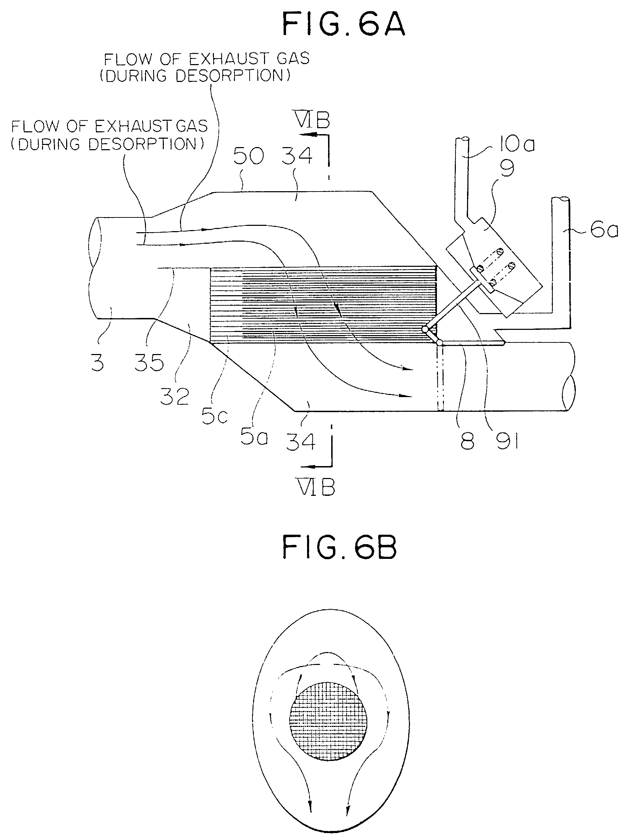

Figs. 6A and 6B are views showing an arrangement of a second embodiment of the present invention.

Fig. 6B is a cross-sectional view taken along a line VIB-VIB of Fig. 6A.

In the second embodiment, adsorption means or a honeycomb member 5 is located at a center of an adsorption tube 50. An exhaust gas is adapted to flow through a space around the outer periphery of the honeycomb member.

The operation of the second embodiment is similar to that of the first embodiment.

A different point of this embodiment from the first embodiment resides in a flow of the exhaust gas with respect to the honeycomb member 5.

More specifically, in the second embodiment, the desorption of HC is more promoted during desorption/purification of HC than the first embodiment because the high-temperature exhaust gas contacts with the entire outer peripheral surface of an absorbent carrying layer 5a. The second embodiment is advantageous in that a series of control can be completed in a shorter period of time than the first embodiment.

Additionally, the honeycomb member 5 is not always required to be positioned at the center, but it may be positioned eccentrically.

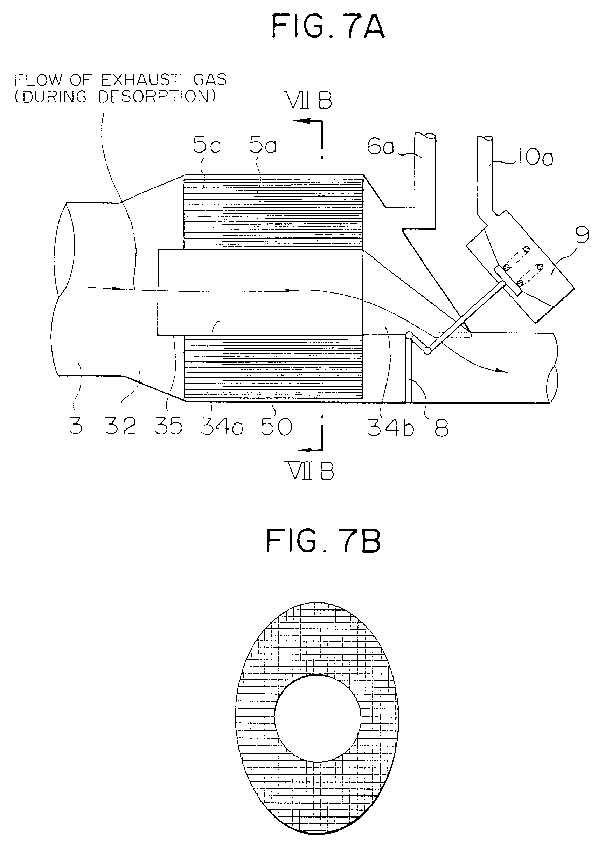

Figs. 7A and 7B are views showing the arrangement of a third embodiment of the present invention.

Fig. 7B is a cross-sectional view taken along a line VIIB-VIIB of Fig. 7A.

In this embodiment, a flow path 34a is formed as a through hole extending at a center of an adsorption tube 50, through which an exhaust gas is adapted to flow. Additionally, the flow path 34a is not always necessary to extend at the center of the adsorption tube, but it may be positioned eccentrically.

The operation of the third embodiment is similar to that of the first embodiment.

This embodiment is advantageous in that the desorption of HC is more promoted and a series of control can be completed in a shorter period of time than the first embodiment because the high-temperature exhaust gas contacts with the entire inner peripheral surface of an absorbent carrying layer 5a during desorption/purification of HC. Further, it is unnecessary to form another flow path so that the apparatus can be made compact.

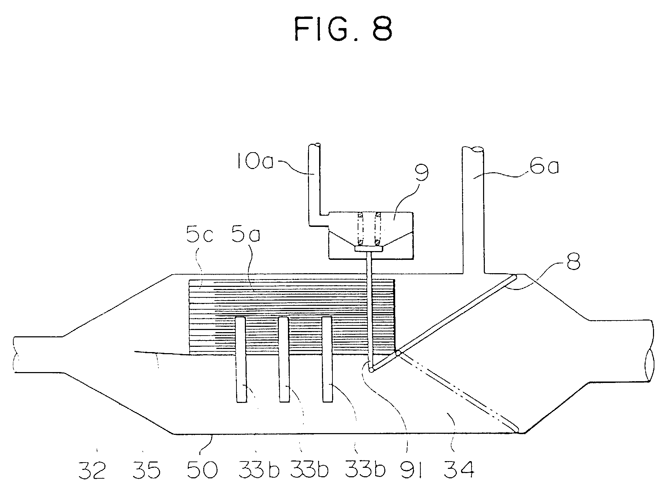

Fig. 8 is a view showing an arrangement of a fourth embodiment of the present invention.

In the fourth embodiment, fins 33b made of, for example, stainless steel are provided to extend from an absorbent carrying layer 5a into a flow path 34.

The operation of the fourth embodiment is similar to that of the first embodiment.

This embodiment is advantageous in that the desorption of HC is more promoted and a series of control can be completed in a shorter period of time than the first embodiment because the high-temperature exhaust gas contacts with the fins 33b extended from the absorbent carrying layer 5a during desorption/purification of HC.

In the illustrated embodiment, the fins 33b are not always necessary to extend vertically, but they may extend slantingly.

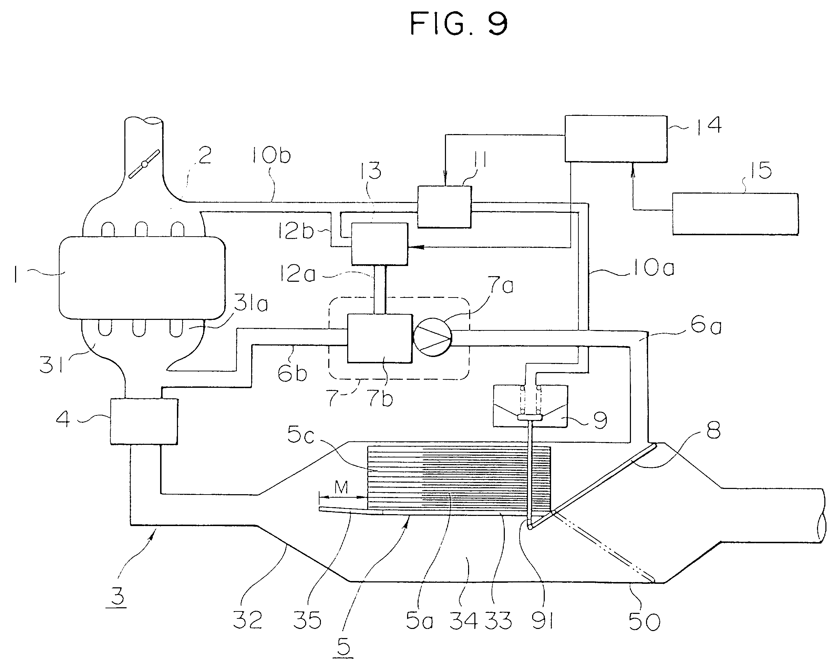

A fifth embodiment of the present invention will now be described with reference to Fig. 9. An essential structure of the fifth embodiment is similar to that of the first embodiment. In this embodiment, however, a pipe port or joint portion between a recirculation flow pipe 6b and an exhaust manifold 31 is located on the upstream side of a converging portion of the exhaust manifold 31 or at an exhaust port portion 31a of an engine 1. This is aimed at effectively utilizing a fact that the pulsation of an exhaust gas at the exhaust port portion is larger than those at the converging portion of the exhaust manifold 31 and a straight portion of the exhaust pipe 3. Accordingly, a negative pressure component of the exhaust gas pulsation applied to a one-way valve or flow controlling means 7a becomes larger, so that the flow rate of recirculation also becomes larger to thereby recirculate and purify desorbed HC rapidly.

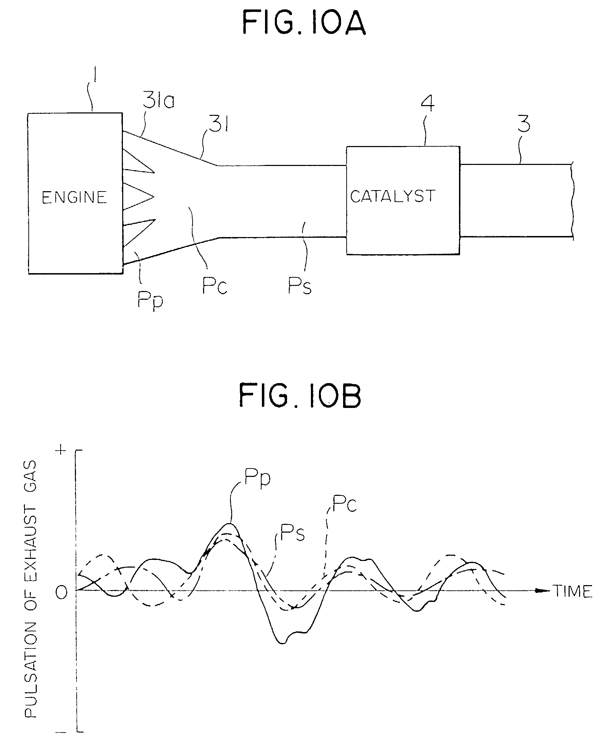

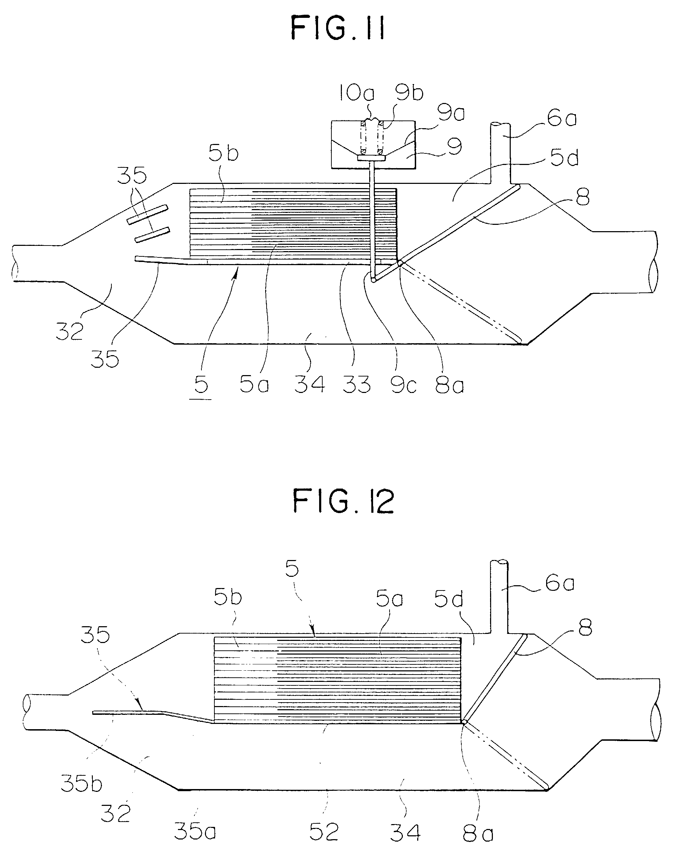

Fig. 10B is a graph showing a relation between the exhaust gas pulsation and time, representative of the magnitude of the exhaust gas pulsation with respect to respective portions, in which Pp indicates the exhaust gas pulsation at the exhaust port portion 31a of the engine 1, Pc indicates the exhaust gas pulsation at the converging portion of the exhaust manifold 31, and Ps indicates the exhaust gas pulsation at the straight portion of the exhaust pipe 3. As clearly be understood from Fig. 10B, the exhaust gas pulsation Pp at the exhaust portion 31a of the engine 1 is the largest. According to the fifth embodiment, the negative pressure component of the exhaust gas pulsation applied to the back surface of the one-way valve 7a can be made larger by effectively utilizing the exhaust gas pulsation Pp. Therefore, the flow rate of recirculation can be increased so as to recirculate and purify the desorbed HC promptly.

According to a sixth embodiment of the present invention, as shown in Fig. 11, a plurality of rectifying plates 35 having planar surfaces (three in the illustrated embodiment) are provided on the upstream side of an adsorption means 5. The plurality of rectifying plates 35 are arranged at certain intervals in such a manner that they extend in parallel relation with the flow of an exhaust gas. More specifically, the plurality of the rectifying plate 35 are mounted in a manner to be inclined toward a direction of a diverging angle of the enlarged-diameter portion 32 as they approach the inner peripheral surface of the enlarged-diameter portion 32. The middle rectifying plate is inclinedly mounted at an angle larger than that of the lowermost one.

By arranging the plurality of rectifying plates 35 in the manner described above, the flow velocity distribution of the exhaust gas which flows into the adsorption means 5 can be more uniformed during absorbing HC.

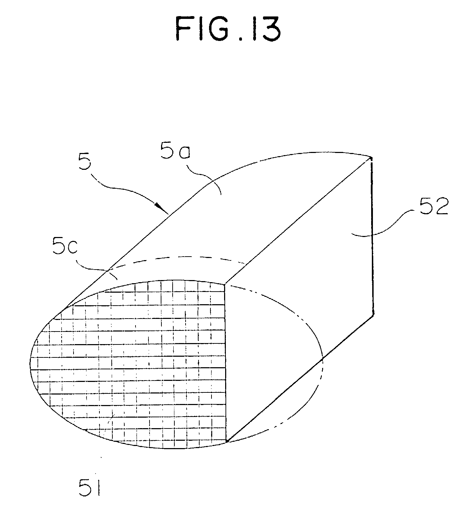

As shown in Figs. 12 and 13, according to a seventh embodiment of the present invention, used as absorption means 5 is a honeycomb member in the shape of a semi-elliptic cylinder like a shape which may be obtained by substantially dividing an elliptic cylinder into two portions. A rectifying plate 35 is provided such that it extends from an upstream end of a flat face 52 of the honeycomb member toward the upstream side of the adsorption means. This rectifying plate 35 comprises a slant portion 35a slightly inclined upwardly with respect to the flat face 52 of the honeycomb member and a parallel portion 35b extending in parallel relation with the flat face 52 from an edge of the slant portion 35a.

The present invention is not limited to the above-described embodiment shown in the drawings, but can be modified in various ways. For example, the present invention can be applied to a type in which the recirculation flow pipes 6a and 6b are connected not to the exhaust pipe at the location just upstream of the catalyst unit 4, but to the intake manifold 2 of the engine 1.

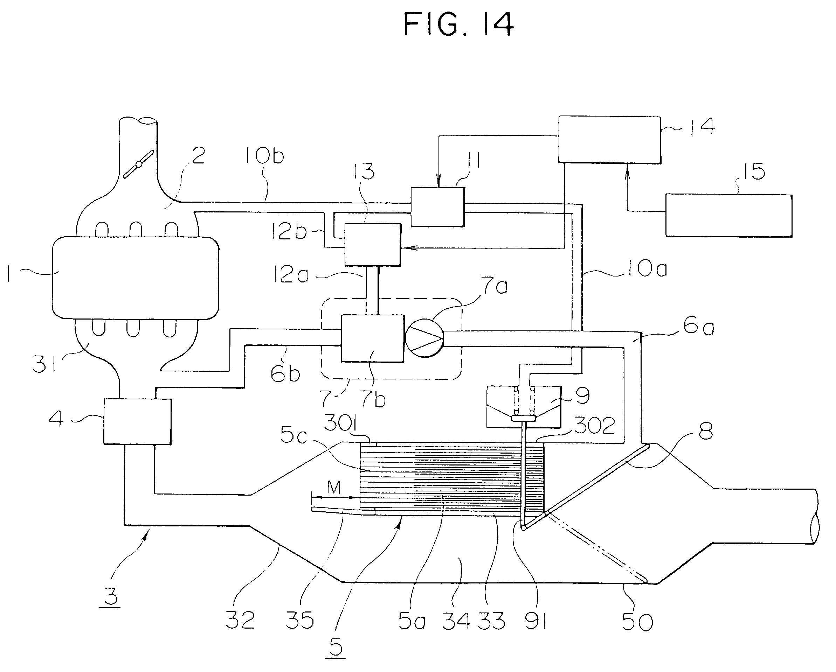

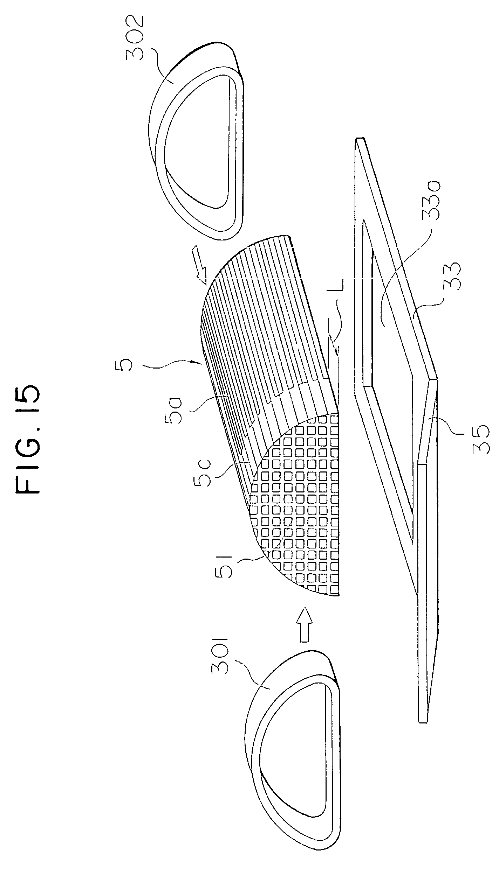

Figs. 14 to 17 show an eighth embodiment of the present invention which differs from the first embodiment in the structure for supporting absorption means or a honeycomb member 5 with respect to an enlarged-diameter portion 32.

Supporting members 301 and 302 made of an elastic gastight material are provided to extend over the whole peripheries of front and rear ends of the honeycomb member 5. The supporting member 301 is not provided at a position where the honeycomb member is exposed to the associated flow path so that the supporting member 301 does not lap over a bore 33a. Thus, a harmful component can be efficiently desorbed from an absorbent. The honeycomb member 5 is held between the enlarged-diameter portion 32 and a partition wall 33 by means of the supporting member 301. Accordingly, an exhaust gas does not flow into the flow path 34 through a gap between the partition wall 33 and the honeycomb member 5. Therefore, when adsorbing the harmful component as well as when desorbing the harmful component from the honeycomb member, the honeycomb member 5 can efficiently adsorb and desorb the harmful component without leakage of the harmful component into the exhaust pipe from the honeycomb member.

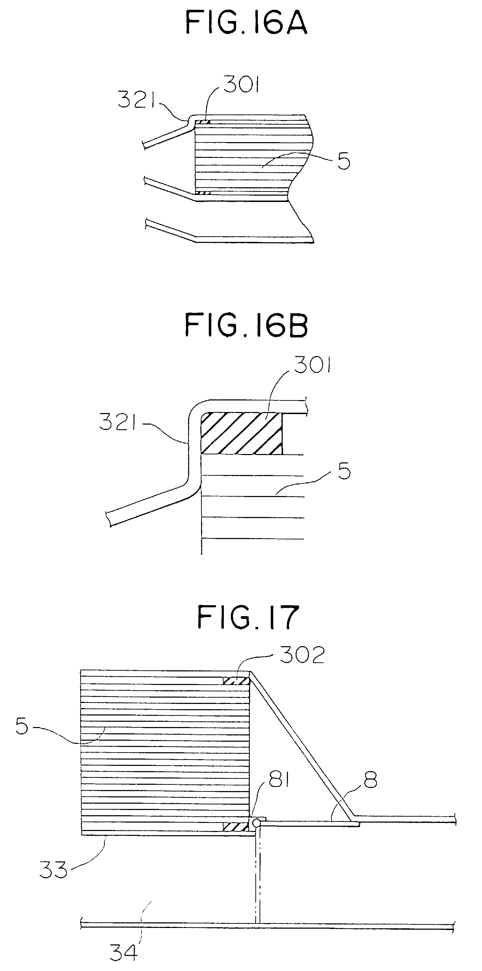

Further, as shown in Figs. 16A and 16B, the enlarged-diameter portion 32 includes a step 321 formed at a portion where it abuts against the front end of the honeycomb member 5. The step 321 prevents the honeycomb member 5 from moving toward the upstream side of the exhaust pipe by external vibrations from the engine or the like.

In the eighth embodiment, the honeycomb member 5 is prevented from moving toward the upstream side of the exhaust pipe by the step 321 formed on the enlarged-diameter portion on the upstream side of the honeycomb member 5. Alternatively, even when a stopper plate, stopper pin or the like is provided on the enlarged-diameter portion 32, a similar effect can be obtained.

Further, as shown in Fig. 17, the rear end of the honeycomb member 5 abuts against a shaft casing 81 serving as a shaft of an exhaust-gas-flow-path change-over valve 8, which shaft casing 81 is attached to the partition wall 33. Due to the abutment between the honeycomb member 5 and the shaft casing 81, the shaft casing also acts as a stopper for preventing the honeycomb member 5 from moving toward the downstream side of the exhaust pipe even when the honeycomb member 5 receives external vibrations from the engine or the like.

In order to prevent the honeycomb member 5 from moving toward the downstream side of the exhaust pipe, a step as shown in Figs. 16A and 16B may be provided on the enlarged-diameter portion, or a stopper plate, stopper pin or the like may be attached to the enlarged-diameter portion.

In the eighth embodiment, because the supporting members 301 and 302 are provided, HC desorbed from the honeycomb member 5 does not leak into the flow path 34 through the bore 33a of the partition wall 33. Further, since the supporting members 301, 302 are provided on the honeycomb member 5 so as not to cover the bore 33a, the heat of the exhaust gas can be preferably conducted to an absorbent carrying layer 5a through the bore 33a.

Thus, in the exhaust gas purification apparatus of this embodiment, the emission of cold HC can be prevented even when the engine is in a cold state before the catalyst reaches an activating temperature. In the apparatus, particularly, since the absorbent carrying layer 5a in which the cold HC is adsorbed by the absorbent and the main exhaust gas flow path 34 are formed separately from each other in such a manner that the exhaust gas directly contact with the absorbent carrying layer 5a, the absorbent is heated by the exhaust gas at a high temperature in the HC desorption/purification process to permit the HC to be effectively desorbed and purified.

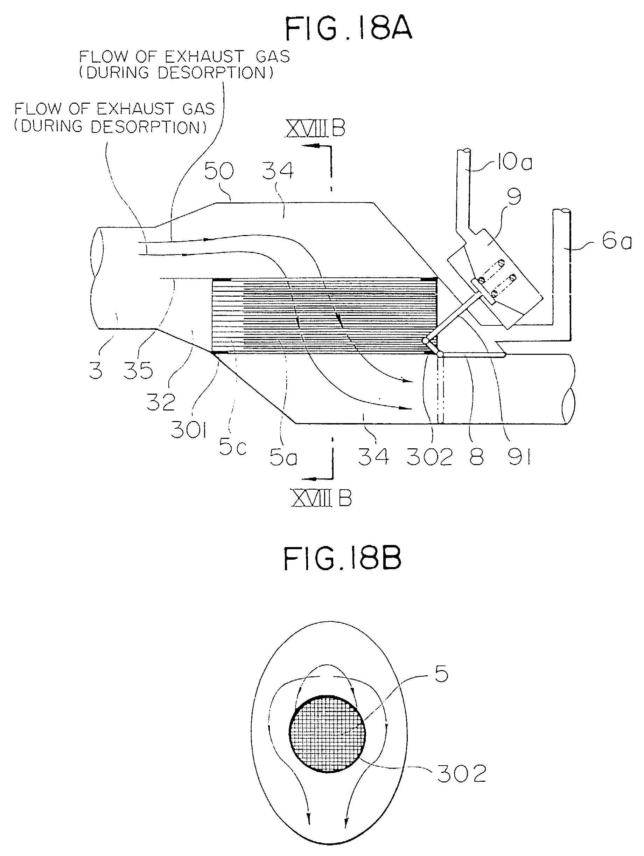

Figs. 18A and 18B are views showing the arrangement of a ninth embodiment of the present invention.

Fig. 18B is a cross-sectional view taken along a line XVIIIB-XVIIIB of Fig. 18A.

In the illustrated embodiment, a honeycomb member 5 is provided to extend at a center of an adsorption tube 50. An exhaust gas is adapted to flow through a space around an outer periphery of the honeycomb member.

The operation of this embodiment is similar to that of the eighth embodiment.

A different point of the ninth embodiment from the eighth embodiment resides in the flow of the exhaust gas with respect to the honeycomb member 5.

More specifically, since the high-temperature exhaust gas contacts with the entire outer peripheral surface of an absorbent carrying layer 5a during desorption/purification of HC, the ninth embodiment is advantageous in that the desorption is more promoted and a series of control can be completed in a shorter period of time than the eighth embodiment.

In addition, the honeycomb member 5 is not always necessary to extend at the center of the adsorption tube, but it may be positioned eccentrically.

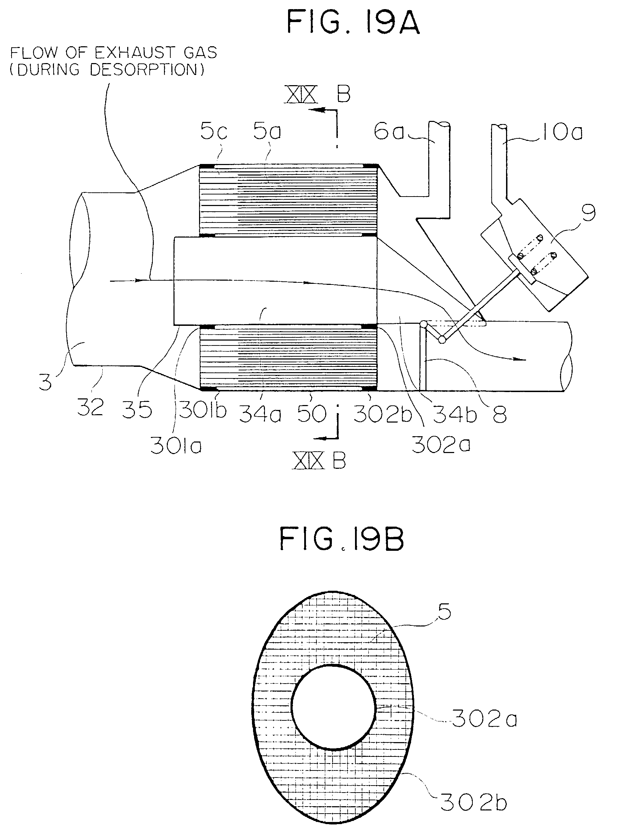

Figs. 19A and 19B are views showing an arrangement of a tenth embodiment of the present invention.

Fig. 19B is a cross-sectional view taken along a line IXXB-IXXB of Fig. 19A.

In the illustrated embodiment, a flow path 34a is formed as a through hole provided at a center of an adsorption tube 50. An exhaust gas is adapted to flow through the flow path. It is not necessary that the flow path 34a be positioned at the center of the adsorption tube 50, but it may be positioned eccentrically.

The operation of this embodiment is similar to that of the eighth embodiment.

Since the high-temperature exhaust gas contacts with the entire inner peripheral surface of an absorbent carrying layer 5a during desorption/purification of HC, the tenth embodiment is advantageous in that the desorption is more promoted and a series of control can be completed in a shorter period of time than the eighth embodiment. Further, it is unnecessary to form another flow path, so that the apparatus can be made compact.

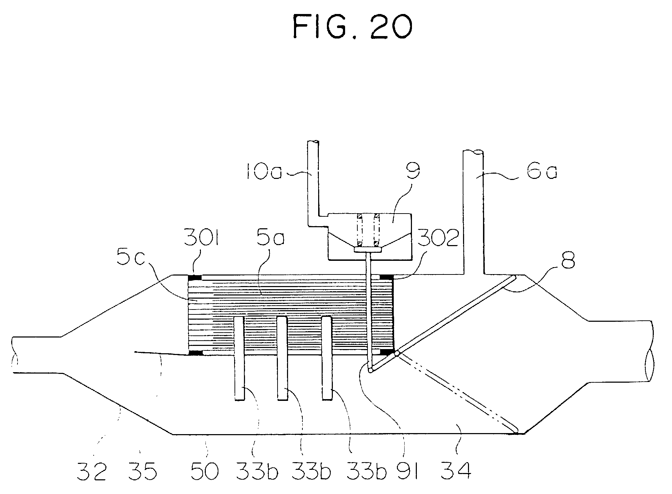

Fig. 20 is a view showing an arrangement of an eleventh embodiment of the present invention.

In the illustrated embodiment, fins 33b made of, for example, stainless steel are extended from an absorbent carrying layer 5a to a flow path 34.

The operation of this embodiment is similar to that of the eighth embodiment.

Since the high-temperature exhaust gas contacts with the fins 33b extended from the absorbent carrying layer 5a during desorption/purification of HC, the eleventh embodiment is advantageous in that the desorption is more promoted and a series of control can be completed in a shorter period of time than the eighth embodiment.

In the present invention, the fins 33b are not always provided to extend vertically, but they may be inclined.

Two flow paths separated by a partition wall (33) having a bore (33a) are formed downstream of a catalyst unit (4) provided in an exhaust pipe of an internal combustion engine (1). Adsorption means (5) for adsorbing an HC component of an exhaust gas of the internal combustion engine (1) is provided in one of the flow paths. When a temperature of the exhaust gas is above a predetermined level, the exhaust gas flows through the other flow path by means of a change-over valve (8). Because the bore (33a) is provided in the partition wall (33), the adsorption means is exposed to the exhaust gas. For the reasons, the HC component adsorbed by the adsorption means is easily desorbed because of the high temperature of the exhaust gas. A one-way valve (7a) which repeatedly performs an opening/closing operation due to pulsation of the exhaust gas, is provided between recirculation flow pipes (6a) and (6b). A position of the one-way valve (7a) between the recirculation flow pipes (6a) and (6b) is determined so that a phase difference between the exhaust gas pulsation applied to the valve from the upstream side of the catalyst unit (4) and the exhaust gas pulsation applied to the valve from the flow path (5d) of the adsorption means (5), inverts substantially by half-wavelength. Thus, a differential pressure applied to both the front and rear surfaces across the one-way valve (7a) becomes large so that the flow rate of recirculation in the recirculation flow pipes (6a) and (6b) is increased, thereby rapidly recirculating the desorbed HC from the adsorption' means (5) to the catalyst unit (4). A rectifying plate (35) is provided on the upstream side of the adsorption means (5). When the engine (1) is in a cool state just after it starts, the change-over valve (8) is-operated to a position shown by a dotted line to flow the exhaust gas through (5d) of the adsorption means (5). At that time, the flow-in velocity of the exhaust gas flowing into the adsorption means (5) is uniformed by the rectifying plate (35), thereby improving HC or the like adsorbing efficiency. After the engine (1) is warmed up, the change-over valve (8) is turned to a position shown by a solid line for opening the exhaust gas flow path.(34), so that the exhaust gas flows through the exhaust gas flow path (34). On that occasion, the rectifying plate (35) prevents vortexes from occurring on the upstream side of the adsorption means (5) to thereby keep the once-adsorbed HC or the like from flowing out toward the exhaust gas pipe (34).

## Claims

1. An exhaust gas purification apparatus including
a vessel (32) provided in an exhaust path (3) of an internal combustion engine (1) and having an inlet portion and an outlet portion for an exhaust gas,
adsorption means (5) provided in said vessel (32) for adsorbing harmful components in the exhaust gas from the internal combustion engine,
a lateral flow path (34) formed in said vessel (32) and disposed laterally of said adsorption means (5) to permit the exhaust gas introduced into said vessel (32) to pass therethrough, and
change-over means (8) provided in said vessel (32) for switching a flow of the exhaust gas introduced into said vessel (32) to a side of said adsorption means (5) or a side of said lateral flow path (34),
wherein said adsorption means (5) has its side exposed to said lateral flow path (34) so that the exhaust gas flowing through said lateral flow path (34) is brought into contact with the side of said adsorption means (5) so that said adsorption means directly receives heat transmitted from the exhaust gas,
**characterized in that**
a rectifying means (35) is disposed in said vessel (32) on an upstream side of said adsorption means (5), whereby a flow of the exhaust gas toward said adsorption means (5) is rectified so that a flow speed distribution of the exhaust gas flowing toward said adsorption means (5) is made uniform.

2. An exhaust gas purification apparatus according to claim 1, wherein an interior of said vessel (32 is divided between said inlet portion and said outlet portion into two halves by a partition (33) in a parallel manner, said partition (33) being formed between said inlet portion and said outlet portion with an opening (33a) which provides communication between a first inner space and a second inner space provided in a parallel manner by said two halves, and wherein said adsorption means (5) is disposed in said first inner space, said lateral flow path (34) is defined by said second inner space and said adsorption means (5) has its side directly exposed to said lateral flow path (34) through said opening (33a) in said partition (33).

3. An exhaust gas purification apparatus according to claim 1, wherein said change-over means (8) is provided only on a downstream side of said adsorption means (5).

4. An exhaust gas purification apparatus according to claim 1, further comprising a catalyst unit (4) provided in said exhaust path (3) of the internal combustion engine (1) to be disposed on an upstream side of said vessel (32) and for purifying harmful components in the exhaust gas;
recirculation flow path (6a, 6b) connecting said vessel (32) and an upstream side of said catalyst unit (4) in said exhaust path to each other so as to return harmful components adsorbed by said adsorption means (5) to the upstream side of said catalyst unit (4a) in said exhaust path; and
recirculation flow means (7a) provided midway said recirculation flow path (6a, 6b) for opening and closing said recirculation flow path, said recirculation flow means (7a) being set to be disposed in said recirculation flow path (6a, 6b) so as to open said recirculation flow path by means of a differential pressure which is produced by a phase difference between pulsations of the exhaust gas applied to the upstream side of said catalyst unit and pulsations of the exhaust gas applied from said recirculation flow path (6a, 6b) on the downstream side of said adsorption means (5).

5. An exhaust gas purification apparatus according to claim 4, wherein a location of said recirculation flow means (7a) in said recirculation flow path (6a, 6b) is set such that a phase difference between an exhaust gas pulsation applied to said recirculation flow means (7a) from the upstream side of said catalyst unit (4) and an exhaust gas pulsation applied to said recirculation flow means (7a) from said recirculation flow path (6a, 6b) on the downstream side of said adsorption means (5) are inverted substantially a half-wave length relative to each other.

6. An exhaust gas purification apparatus according to one of claims 1 to 5,
**characterized in that**
when said change-over means is changed over to shut off a flow of the exhaust gas on the side of said adsorption means and to allow a flow of the exhaust gas on the side of said lateral flow path, the exhaust gas introduced into said lateral flow path flows from said inlet portion to said outlet portion in said vessel not through any intermediate member, and further in that
said lateral flow path is defined by inner walls of said vessel.

7. An exhaust gas purification apparatus according to claim 2, further comprising rectifying means (35) provided in said vessel (32) to be disposed on an upstream side of said adsorption means (5), whereby a flow of the exhaust gas toward said adsorption means (5) is rectified so that a flow speed distribution of the exhaust gas flowing toward said adsorption means (5) is made uniform, and wherein said rectifying means (35) is integrally formed on said partition (33) as an extension thereof, said extension being constructed to extend on the upstream side of said adsorption means (5) in said vessel.

8. An exhaust gas purification apparatus according to claim 1 or 7, wherein said rectifying means (35) is shaped to bend midway thereof toward said adsorption means (5).

9. An exhaust gas purification apparatus according to one of claims 1 to 8, wherein said adsorption means (5) comprises a honeycomb member in the form of a semi-elliptic cylinder obtained by dividing an elliptic cylinder into two halves,
said honeycomb member is positioned in said vessel (32) with a flat surface of said semi-elliptic cylinder facing a center of said vessel, and
said lateral flow path (34) is formed in said vessel to be disposed adjacent to the flat surface of said semi-elliptic cylinder.

10. An exhaust gas purification apparatus according to claim 9, wherein said honeycomb member constituting said adsorption means (5) is composed of a ceramic material, and an absorbent for adsorbing harmful components in the exhaust gas is carried in a multiplicity of through holes in said honeycomb member.

11. An exhaust gas purification apparatus according to claim 1, **characterized in that** said adsorption means (5) is located within said vessel (32) so that said lateral flow path (34) is defined by a space around the outer periphery of said adsorbent means (5) and the boundary walls of said vessel (32).

12. An exhaust gas purification apparatus according to claim 1, **characterized in that** said lateral flow path is defined by a through hole (34a) extending through said adsorption means (5) in the longitudinal direction thereof.

## Patentansprüche

1. Abgasreinigungsgerät mit
einem Behälter (32), der in einer Abgasbahn (3) einer Brennkraftmaschine (1) vorgesehen ist, und einen Einlaßabschnitt und einen Auslaßabschnitt für ein Abgas hat,
einer Absorptionseinrichtung (5), die in dem Behälter (32) vorgesehen ist, um schädliche Bestandteile in dem Abgas aus der Brennkraftmaschine zu absorbieren,
einer Seitenströmungsbahn (34), die in dem Behälter (32) ausgebildet ist und seitlich von der Absorptionseinrichtung (5) angeordnet ist, um zu ermöglichen, daß das in den Behälter (32) eingeführte Abgas durch diesen durchtritt, und
einer Umschalteinrichtung (8), die in dem Behälter (32) vorgesehen ist, um eine Strömung des Abgases umzuschalten, das in den Behälter (32) eingeführt wird, zu einer Seite der Absorptionseinrichtung (5) oder einer Seite der Seitenströmungsbahn (34),
wobei die Absorptionseinrichtung (5) ihre Seite der Seitenströmungsbahn (34) so ausgesetzt hat, daß das durch die Seitenströmungsbahn (34) strömende Abgas in Kontakt mit der Seite der Absorptionseinrichtung (5) gebracht wird, so daß die Absorptionseinrichtung direkt die Wärme aufnimmt, die von dem Abgas übertragen wird,
**dadurch gekennzeichnet, daß**
eine gleichrichtende Einrichtung (35) in dem Behälter (32) an einer stromaufwärtigen Seite der Absorptionseinrichtung (5) angeordnet ist, wodurch eine Strömung des Abgases zu der Absorptionseinrichtung (5) hin so gleichgerichtet wird, daß eine Strömungsgeschwindigkeitsverteilung des Abgases gleichförmig gemacht wird, das zu der Absorptionseinrichtung (5) hin strömt.

2. Abgasreinigungsgerät nach Anspruch 1, wobei ein Inneres des Behälters (32) zwischen dem Einlaßabschnitt und dem Auslaßabschnitt in zwei Hälften durch eine Teilung (33) in einer parallelen Weise geteilt ist, wobei die Teilung (33) zwischen dem Einlaßabschnitt und dem Auslaßabschnitt mit einer Öffnung (33a) ausgebildet ist, die eine Verbindung zwischen einem ersten Innenraum und einem zweiten Innenraum schafft, die in einer parallelen Weise durch die zwei Hälften vorgesehen sind, und wobei die Absorptionseinrichtung (5) in dem ersten Innenraum angeordnet ist, wobei die Seitenströmungsbahn (34) durch den zweiten Innenraum definiert ist, und die Absorptionseinrichtung (5) ihre Seite direkt der Seitenströmungsbahn (34) ausgesetzt hat über die Öffnung (33a) in der Teilung (33).

3. Abgasreinigungsgerät nach Anspruch 1, wobei die Umschalteinrichtung (8) nur an einer stromabwärtigen Seite der Absorptionseinrichtung (5) vorgesehen ist.

4. Abgasreinigungsgerät nach Anspruch 1, das des weiteren folgendes aufweist: eine Katalysatoreinheit (4), die in der Abgasbahn (3) der Brennkraftmaschine (1) vorgesehen ist, um an einer stromaufwärtigen Seite des Behälters (32) angeordnet zu sein und um schädliche Bestandteile in dem Abgas zu reinigen; eine Rückführströmungsbahn (6a, 6b), die den Behälter (32) und eine stromaufwärtige Seite der Katalysatoreinheit (4) in der Abgasbahn miteinander verbindet, um schädliche Bestandteile, die durch die Absorptionseinrichtung (5) absorbiert sind, zu der stromaufwärtigen Seite der Katalysatoreinheit (4a) in der Abgasbahn zurückzuleiten; und eine Rückführströmungseinrichtung (7a), die in der Mitte der Rückführströmungsbahn (6a, 6b) vorgesehen ist, um die Rückführströmungsbahn zu öffnen und zu schließen, wobei die Rückführströmungseinrichtung (7a) so eingerichtet ist, um in der Rückführströmungsbahn (6a, 6b) angeordnet zu sein, um die Rückführströmungsbahn mittels eines Differenzdrucks zu öffnen, der durch eine Phasendifferenz zwischen Pulsationen des Abgases, die auf die stromaufwärtige Seite der Katalysatoreinheit aufgebracht werden, und Pulsationen des Abgases, die auf die Rückführströmungsbahn (6a, 6b) an der stromabwärtigen Seite der Absorptionseinrichtung (5) aufgebracht werden, erzeugt wird.

5. Abgasreinigungsgerät nach Anspruch 4, wobei eine Stelle der Rückführströmungseinrichtung (7a) in der Rückführströmungsbahn (6a, 6b) derart eingerichtet ist, daß eine Phasendifferenz zwischen einer Abgaspulsation, die auf die Rückführströmungseinrichtung (7a) von der stromaufwärtigen Seite der Katalysatoreinheit (4) aufgebracht wird, und einer Abgaspulsation, die auf die Rückführströmungseinrichtung (7a) von der Rückführströmungsbahn (6a, 6b) an der stromabwärtigen Seite der Absorptionseinrichtung (5) aufgebracht wird, sich im wesentlichen um eine halbe Wellenlänge voneinander unterscheiden.

6. Abgasreinigungsgerät nach einem der Ansprüche 1 bis 5,
**dadurch gekennzeichnet, daß,**
wenn die Umschalteinrichtung umgeschaltet ist, um eine Strömung des Abgases an der Seite der Absorptionseinrichtung abzusperren und um zu ermöglichen, daß eine Strömung des Abgases an der Seite der Seitenströmungsbahn ermöglicht wird, das in die Seitenströmungsbahn eingeführte Abgas von dem Einlaßabschnitt zu dem Auslaßabschnitt in dem Behälter nicht über ein Zwischenelement strömt, und des weiteren **dadurch, daß** die Seitenströmungsbahn durch innere Wände des Behälters definiert ist.

7. Abgasreinigungsgerät nach Anspruch 2, daß des weiteren eine gleichrichtende Einrichtung (35) aufweist, die in dem Behälter (32) vorgesehen ist, um an einer stromaufwärtigen Seite der Absorptionseinrichtung (5) angeordnet zu sein, wodurch eine Strömung des Abgases zu der Absorptionseinrichtung (5) hin gleichgerichtet wird, so daß eine Strömungsgeschwindigkeitsverteilung des zu der Absorptionseinrichtung (5) hin strömenden Abgases gleichförmig gemacht wird, und wobei die gleichrichtende Einrichtung (35) an der Teilung (33) als eine Verlängerung dieser einstückig ausgebildet ist, wobei die Verlängerung so aufgebaut ist, daß sie sich an der stromaufwärtigen Seite der Absorptionseinrichtung (5) in dem Behälter erstreckt.

8. Abgasreinigungsgerät nach Anspruch 1 oder 7, wobei die gleichrichtende Einrichtung (35) so geformt ist, daß sie in ihrer Mitte zu der Absorptionseinrichtung (5) hin gebogen ist.

9. Abgasreinigungsgerät nach einem der Ansprüche 1 bis 8, wobei die Absorptionseinrichtung (5) ein Honigwabenelement in der Gestalt eines halbelliptischen Zylinders aufweist, der durch Teilen eines elliptischen Zylinders in zwei Hälften erhalten wird,
wobei das Honigwabenelement in dem Behälter (32) positioniert ist, wobei eine flache Oberfläche des halbelliptischen Zylinders einer Mitte des Behälters zugewandt ist, und
wobei die Seitenströmungsbahn (34) in dem Behälter so ausgebildet ist, daß sie in der Nachbarschaft der flachen Oberfläche des halbelliptischen Zylinders angeordnet ist.

10. Abgasreinigungsgerät nach Anspruch 9, wobei das die Absorptionseinrichtung (5) bildende Honigwabenelement aus keramischem Material zusammengesetzt ist, und wobei ein Absorptionsmittel zum Absorbieren schädlicher Bestandteile in dem Abgas in einer Vielzahl von Durchgangsöffnungen in dem Honigwabenelement getragen wird.

11. Abgasreinigungsgerät nach Anspruch 1,
**dadurch gekennzeichnet, daß**
die Absorptionseinrichtung (5) innerhalb dem Behälter (32) so angeordnet ist, daß die Seitenströmungsbahn (34) durch einen Raum um den äußeren Umfang der Absorptionseinrichtung (5) herum und die Grenzwände des Behälters (32) definiert ist.

12. Abgasreinigungsgerät nach Anspruch 1,
**dadurch gekennzeichnet, daß**
die Seitenströmungsbahn durch eine Durchgangsöffnung (34a) definiert ist, die sich durch die Absorptionseinrichtung (5) in deren Längsrichtung hindurch erstreckt.

## Revendications

1. Appareil de purification des gaz d'échappement comprenant :
un récipient (32) disposé dans un circuit d'échappement (3) d'un moteur à combustion interne (1) et comportant une portion d'entrée et une portion de sortie pour des gaz d'échappement ;
des moyens d'adsorption (5) disposés dans le récipient (32) pour l'adsorption de composants nocifs dans les gaz d'échappement provenant du moteur à combustion interne ;
un circuit d'écoulement latéral (34) formé dans le récipient (32) et disposé latéralement aux moyens d'adsorption (5) pour permettre la traversée des gaz d'échappement introduits dans le récipient (32) ; et
des moyens de permutation (8) prévus dans le récipient (32) pour faire passer un flux de gaz d'échappement introduit dans le récipient (32) sur un côté des moyens d'adsorption (5) ou sur un côté du circuit d'écoulement latéral (34),
les moyens d'adsorption (5) présentant le côté exposé au circuit d'écoulement latéraux (34) de sorte que les gaz d'échappement traversant le circuit d'écoulement latéral (34) sont mis en contact avec le côté des moyens d'adsorption (5) de sorte que les moyens d'adsorption reçoivent directement la chaleur transmise par les gaz d'échappement,
caractérisé en ce que
des moyens de rectification (35) sont disposés dans le récipient (32) sur le côté amont des moyens d'adsorption (5) de sorte qu'un flux de gaz d'échappement en direction des moyens d'adsorption (5) est rectifié et la répartition de la vitesse du flux des gaz d'échappement s'écoulant en direction des moyens d'adsorption (5) étant rendue uniforme.

2. Appareil de purification des gaz d'échappement selon la revendication 1, dans lequel l'intérieur du récipient (32) est divisé entre la portion d'entrée et la portion de sortie en deux moitiés par une cloison (33) de façon parallèle, la cloison (33) étant formée entre la portion d'entrée et la portion de sortie avec une ouverture (33a) qui assure la communication entre un premier espace intérieur et un second espace intérieur disposés de façon parallèle par les deux moitiés, et les moyens d'adsorption (5) étant disposés dans le premier espace intérieur, le circuit d'écoulement latéral (34) étant défini par le second espace intérieur et les moyens d'adsorption (5) ayant un côté directement exposé au circuit d'écoulement latéral (34) à travers l'ouverture (33a) dans la cloison (33).

3. Appareil de purification des gaz d'échappement selon la revendication 1, dans lequel les moyens de permutation (8) ne sont prévus que sur le côté aval des moyens d'adsorption (5).

4. Appareil de purification des gaz d'échappement selon la revendication 1, comprenant de plus une unité de catalyseur (4) disposée dans le circuit d'échappement (3) du moteur à combustion interne (1) de façon à être disposé sur le côté amont du récipient (32) et pour purifier les composants nocifs des gaz d'échappement ; un circuit d'écoulement en recirculation (6a, 6b) raccordant entre eux le récipient (32) et un côté amont de l'unité de catalyseur (4) dans le circuit d'échappement de façon à ramener les composants nocifs adsorbés par les moyens d'adsorption (5) sur le côté amont de l'unité de catalyseur (4a) dans le circuit d'échappement ; et des moyens d'écoulement en recirculation (7a) disposés à mi-chemin sur le circuit d'écoulement en recirculation (6a, 6b) pour ouvrir et fermer le circuit d'écoulement en recirculation, les moyens d'écoulement en recirculation (7a) étant agencés dans le circuit d'écoulement en recirculation (6a, 6b) de façon à ouvrir le circuit d'écoulement en recirculation par le biais d'une pression différentielle qui est produite par une différence de phase entre les pulsations des gaz d'échappement appliquées au côté amont de l'unité de catalyseur et les pulsations des gaz d'échappement appliquées par le circuit d'écoulement en recirculation (6a, 6b) sur le côté aval des moyens d'adsorption (5).

5. Appareil de purification des gaz d'échappement selon la revendication 4, dans lequel les moyens d'écoulement en recirculation (7a) dans le circuit d'écoulement en recirculation (6a, 6b) sont agencés de telle sorte qu'une différence de phase entre une pulsation des gaz d'échappement appliquée aux moyens d'écoulement en recirculation (7a) par le côté amont de l'unité de catalyseur (4) et une pulsation de gaz d'échappement appliquée aux moyens d'écoulement en recirculation (7a) par le circuit d'écoulement en recirculation (6a, 6b) sur le côté aval des moyens d'adsorption (5) sont inversées l'une par rapport à l'autre sensiblement d'une longueur de demi-onde.

6. Appareil de purification des gaz d'échappement selon l'une quelconque des revendications 1 à 5,
caractérisé en ce que
lorsque les moyens de permutation sont actionnés pour fermer un écoulement des gaz d'échappement sur le côté des moyens d'adsorption et pour permettre un écoulement des gaz d'échappement sur le côté du circuit d'écoulement latéral, les gaz d'échappement introduits dans le circuit d'écoulement latéral s'écoulent à partir de la portion d'entrée vers la portion de sortie dans le récipient sans passer par un élément intermédiaire quelconque et de plus, en ce que le circuit d'écoulement latéral est défini par des parois internes du récipient.

7. Appareil de purification des gaz d'échappement selon la revendication 2, comprenant de plus des moyens de rectification (35) disposés dans le récipient (32) de façon à être disposés sur le côté amont des moyens d'adsorption (5), de sorte qu'un flux des gaz d'échappement en direction des moyens d'adsorption (5) est rectifié de façon qu'une répartition de la vitesse du flux des gaz d'échappement s'écoulant en direction des moyens d'adsorption (5) soit rendue uniforme et dans lequel les moyens de rectification (35) sont formés solidairement sur la cloison (33) sous forme de prolongement de celle-ci, ce prolongement étant construit de façon à s'étendre sur le côté amont des moyens d'adsorption (5) dans le récipient.

8. Appareil de purification des gaz d'échappement selon la revendication 1 ou 7, dans lequel les moyens de rectification (35) forment un cintrage à mi-chemin en direction des moyens d'adsorption (5).

9. Appareil de purification des gaz d'échappement selon l'une des revendications 1 à 8, dans lequel les moyens d'adsorption (5) comprennent un élément alvéolaire sous forme de cylindre semi-elliptique obtenu en divisant un cylindre elliptique en deux moitiés,
l'élément alvéolaire étant positionné dans le récipient (32) avec une surface plate du cylindre semi-elliptique faisant face au centre du récipient, et
le circuit d'écoulement latéral (34) est formé dans le récipient pour être disposé de façon contiguë à la surface plate du cylindre semi-elliptique.

10. Appareil de purification des gaz d'échappement selon la revendication 9, dans lequel l'élément alvéolaire constituant les moyens d'adsorption (5) consiste en un matériau en céramique et en un absorbant pour adsorber les composants nocifs contenus dans les gaz d'échappement est transporté dans une multiplicité de trous traversants dans l'élément alvéolaire.

11. Appareil de purification des gaz d'échappement selon la revendication 1, caractérisé en ce que les moyens d'adsorption (5) sont situés à l'intérieur du récipient (32) de sorte que le circuit d'écoulement latéral (34) est défini par un espace autour de la périphérie extérieure des moyens d'adsorption (5) et les parois de délimitation du récipient (32).

12. Appareil de purification des gaz d'échappement selon la revendication 1, caractérisé en ce que le circuit d'écoulement latéral est défini par un trou traversant (34a) s'étendant à travers les moyens d'adsorption (5) dans sa direction longitudinale.
